# EUROPÄISCHE PATENTSCHRIFT

(11) **EP 0 965 191 B1**
(45) Veröffentlichungstag und Bekanntmachung des Hinweises auf die Patenterteilung: **11.02.2004**
(21) Anmeldenummer: 97949891.2
(22) Anmeldetag: 08.11.1997
(51) Int. Cl.: H04B 17/00, H04B 1/10, H04B 1/38

(54) **FUNKGERÄT MIT EINSTELLBARER EMPFANGSQUALITÄT**
RADIO APPARATUS WITH ADJUSTABLE RECEPTION QUALITY
EMETTEUR-RECEPTEUR A QUALITE DE RECEPTION REGLABLE

(30) Priorität: 03.03.1997 DE 19708490
(43) Veröffentlichungstag der Anmeldung: 22.12.1999
(73) Patentinhaber: ROBERT BOSCH GMBH, 70442 Stuttgart (DE)
(72) Erfinder: MADER, Thomas, D-31139 Hildesheim (DE); KOTTSCHLAG, Gerhard, D-31139 Hildesheim (DE); PITZ, Gerhard, D-31139 Hildesheim (DE)
(86) Internationale Anmeldenummer: PCT/DE1997/002611
(87) Internationale Veröffentlichungsnummer: WO 1998/039862

(56) Entgegenhaltungen:
- EP-A- 0 506 443
- EP-A- 0 561 117
- EP-A- 0 599 244
- US-A- 5 265 270
- US-A- 5 390 345

## Beschreibung

### Stand der Technik

Die Erfindung geht von einem Funkgerät nach der Gattung des Hauptanspruchs aus.

Funkgeräte, die mit einem Empfangsteil zum Signalempfang von Funkstationen versehen sind, sind bereits bekannt.

Aus dem US-Patent 5 265 270 ist ein Funkgerät bekannt, bei welchem anhand der Qualität des empfangenen Signals die Aktivierung eines Energiesparmodus ausgelöst wird. Bei guter Empfangsqualität wird dabei der Energiesparmodus eingeleitet. Dieser Energiesparmodus wird für eine vorgegebene Zeit oder bis zum Empfang eines entsprechenden Signals aufrechterhalten, so dass seine Dauer fest vorgegeben sein muss. Für eine weitere Optimierung des Sparmodus besteht Bedarf.

Die EP 561 117 A1 beschreibt Maßnahmen zur Erkennung eines durch Nachbarkanalempfang gestörten Senders anhand von Signalpegeln, wobei erkanntem gestörtem Sender eine Umschaltung von Filtern vorgenommen wird, die bei nicht gestörtem Sender wieder rückgängig gemacht wird.

### Vorteile der Erfindung

Das erfindungsgemäße Funkgerät mit den Merkmalen des Hauptanspruchs hat demgegenüber den Vorteil, daß die Qualität des tatsächlichen Signalempfangs an eine beispielsweise vom Benutzer vorgebbare Signalempfangsqualität angepaßt werden kann. Auf diese Weise läßt sich die Empfangsqualität des Funkgerätes je nach Bedarf individuell einstellen.

Durch die in den Unteransprüchen aufgeführten Maßnahmen sind vorteilhafte Weiterbildungen und Verbesserungen des im Hauptanspruch angegebenen Funkgerätes möglich.

Besonders vorteilhaft ist es, daß die Auswerteeinheit bei fehlerhaftem Signalempfang die Empfindlichkeit und/oder die Störfestigkeit, insbesondere bei Nachbarkanalstörungen oder Intermodulation, des Empfangsteils erhöht und bei für eine vorgegebene Zeit fehlerfreiem Signalempfang die Empfindlichkeit und/oder die Störfestigkeit des Empfangsteils absenkt. Auf diese Weise läßt sich besonders bei guten Empfangsbedingungen Energie einsparen, so daß die Betriebsdauer eines Akkumulators im Funkgerät erhöht wird.

Vorteilhaft ist auch die Verwendung mindestens eines zuschaltbaren Empfangsverstärkers, den die Auswerteeinheit bei fehlerhaftem Signalempfang zuschaltet und bei fehlerfreiem Signalempfang überbrückt. Somit ist eine besonders einfache Möglichkeit zur Beeinflussung der Empfindlichkeit des Empfangsteils gegeben, die besonders bei fehlerfreiem Signalempfang zu einer erheblichen Stromeinsparung führt.

Vorteilhaft ist weiterhin, daß das Empfangsteil mindestens einen Mischer aufweist und daß die Auswerteeinheit die Stromversorgung des mindestens einen Mischers bei fehlerhaftem Signalempfang auf einen ersten vorgegebenen Wert erhöht und bei fehlerfreiem Signalempfang auf einen zweiten vorgegebenen Wert verringert. Auf diese Weise ist eine besonders einfache Möglichkeit zur Beeinflussung der Störfestigkeit, insbesondere des Intermodulationsverhaltens des Empfangsteils gegeben, bei der besonders für fehlerfreien Signalempfang der Stromverbrauch erheblich reduziert werden kann.

Vorteilhaft ist weiterhin, daß das Empfangsteil mindestens eine erste Filterkonfiguration und eine zweite Filterkonfiguration umfaßt und daß die Auswerteeinheit auf die erste Filterkonfiguration bei fehlerhaftem Signalempfang umschaltet und bei fehlerfreiem Signalempfang auf die zweite Filterkonfiguration umschaltet. Auf diese Weise kann, je nachdem ob eine Nachbarkanalfilterung besonders wichtig ist oder Störungen im Nutzkanal ausgeblendet werden müssen, die für den jeweiligen Fall geeignetere Filterkonfiguration gewählt werden, so daß dadurch eine Optimierung der Qualität des Signalempfangs auf einfache Weise möglich ist.

Vorteilhaft ist weiterhin, daß ein Betriebsmodus vorgesehen ist, bei dem die Auswerteeinheit die Empfindlichkeit und/oder die Störfestigkeit des Empfangsteils auf einen Maximalwert erhöht. Auf diese Weise kann jederzeit auf maximale Empfindlichkeit und/oder Störfestigkeit des Empfangsteils umgeschaltet werden, wenn es beispielsweise für Testzwecke auf den Stromverbrauch nicht ankommen soll.

Vorteilhaft ist auch, daß ein Eingabeschacht für eine Chipkarte und ein Kartenleser vorgesehen sind und daß der Betriebsmodus in Abhängigkeit einer vom Kartenleser im Eingabeschacht detektierten Chipkarte einstellbar ist. Auf diese Weise kann für einen Gerätetest mit Hilfe der Chipkarte die Leistungsfähigkeit des Empfangsteils des Funkgerätes geprüft werden. Die Chipkarte kann dabei gleichzeitig die Funktion einer Zugangsberechtigung für Testzwecke erfüllen.

Ein weiterer Vorteil besteht darin, daß der Betriebsmodus vorzugsweise durch eine Taste am Funkgerät einstellbar ist. Dies stellt eine besonders einfache Maßnahme zur Einstellung der maximalen Leistungsfähigkeit des Empfangsteils des Funkgerätes dar.

Ein weiterer Vorteil besteht darin, daß der Betriebsmodus in Abhängigkeit einer Aufforderung einer Basisstation, vorzugsweise zur Rücksendung eines zuvor an das Funkgerät gesendeten Signals, am Funkgerät einstellbar ist. Auf diese Weise wird das Empfangsteil des Funkgerätes automatisch, beispielsweise bei von der Basisstation initiierten Testzwecken, auf bestmögliche Empfangsqualität eingestellt.

Vorteilhaft ist außerdem, daß der Betriebsmodus bei Detektion einer externen Stromversorgung, insbesondere über einen Stromversorgungsadapter, und/oder einer angeschlossenen externen Antenne einstellbar ist. In diesem Fall kann auf Stromsparmaßnahmen im Funkgerät zugunsten eines verbesserten Signalempfangs verzichtet werden, da eine externe Stromversorgung zur Verfügung steht bzw. vor allem bei Detektion einer angeschlossenen externen Antenne auf die Verwendung des Funkgerätes in einem Kraftfahrzeug geschlossen wird, so daß mit schnellerem Wechsel der Funkzellen zu rechnen ist, als bei Betrieb des Funkgerätes zu Fuß und daher das Funkgerät auf bestmögliche Empfangsqualität eingestellt werden muß. Aufgrund der Detektion kann die Einstellung dieses Betriebsmodus automatisch, das heißt ohne Einwirkung des Benutzers erfolgen.

Vorteilhaft ist weiterhin, daß ein Sensor vorgesehen ist und daß der Betriebsmodus in Abhängigkeit eines vom Sensor ermittelten Meßwertes einstellbar ist. Somit ist eine weitere einfache Möglichkeit gegeben, das Empfangsteil des Funkgerätes auf bestmöglichen Signalempfang automatisch einzustellen. Dabei können je nach Art des gewählten Sensors nahezu beliebige Meßgrößen für die Einstellung dieses Betriebsmodus zugrundegelegt werden.

Ein weiterer Vorteil darin, daß der Sensor die Ladung eines an das Funkgerät angeschlossenen Akkumulators detektiert und daß der Betriebsmodus in Abhängigkeit der durch den Sensor detektierten Ladung des Akkumulators einstellbar ist. Auf diese Weise wird sichergestellt, daß nur dann auf hohen Stromverbrauch im Empfangsteil des Funkgerätes umgeschaltet wird, wenn die vom Akkumulator zur Verfügung gestellte Spannung nicht unzumutbar stark einbricht.

Ein weiterer Vorteil besteht auch darin, daß eine Schnittstelle für den Anschluß einer Datenverarbeitungseinheit vorgesehen ist und daß der Betriebsmodus in Abhängigkeit von über die Schnittstelle an das Funkgerät übertragenen Daten einstellbar ist. Auf diese Weise läßt sich die Empfangsqualität des Empfangsteils des Funkgerätes von außen durch den Benutzer kontrollieren und programmieren.

### Zeichnung

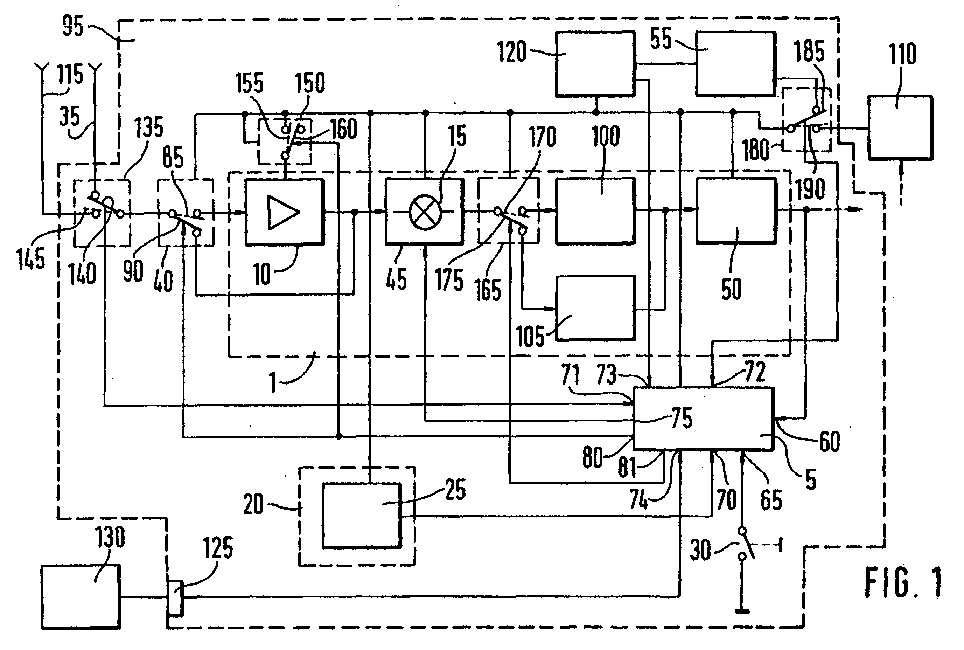

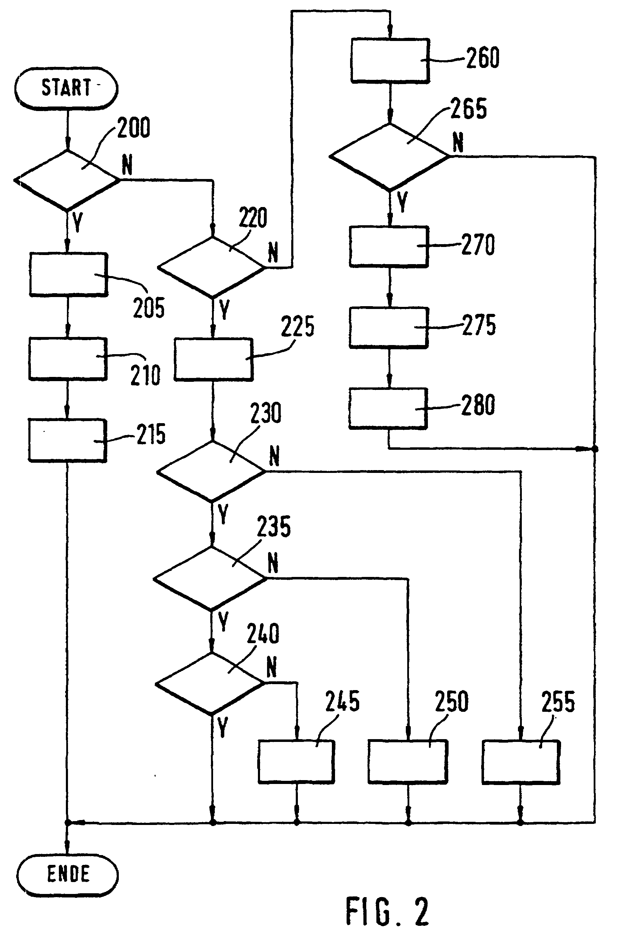

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Funkgerätes und Figur 2 einen Ablaufplan für eine Auswerteeinheit des Funkgerätes.

### Beschreibung des Ausführungsbeispiels

In Figur 1 kennzeichnet 35 eine erste Empfangsantenne eines für Mobilfunk vorgesehenen Funkgerätes 95. Die Empfangsantenne 35 ist über einen ersten Schalter 135 in einer ersten Schalterstellung 140 mit einem zweiten Schalter 40, der steuerbar ist, verbindbar. Über den ersten Schalter 135 ist in einer zweiten Schalterstellung 145 eine zweite Empfangsantenne 115 an den zweiten Schalter 40 anschließbar. Über den zweiten Schalter 40 ist in einer ersten Schalterstellung 85 der Eingang eines Empfangsverstärkers 10 eines Empfangsteils 1 des Funkgerätes 95 mit der über den ersten Schalter 135 angeschlossenen Empfangsantenne 35, 115 verbindbar. Das Empfangsteil 1 umfaßt weiterhin einen eingangsseitig mit dem Ausgang des Empfangsverstärkers 10 verbundenen Demodulator 45, der neben anderen, nicht dargestellten Baugruppen auch einen Mischer 15 umfaßt. Der Ausgang des Demodulators 45 ist über einen dritten Schalter 165 in einer ersten Schalterstellung 170 mit dem Eingang einer ersten Filterkonfiguration 100 und in einer zweiten Schalterstellung 175 mit dem Eingang einer zweiten Filterkonfiguration 105 verbindbar. Der Ausgang der ersten Filterkonfiguration 100 und der Ausgang der zweiten Filterkonfiguration 105 sind miteinander verbunden und an den Eingang eines Decoders 50 angeschlossen, der wie die beiden Filterkonfigurationen 100, 105 ebenfalls im Empfangsteil 1 angeordnet ist und an seinem Ausgang mit weiteren Empfangsbausteinen des Funkgerätes in dem Fachmann bekannter Weise verbunden sein kann, was durch den gestrichelten Pfeil in Figur 1 am Ausgang des Decoders 50 angedeutet wird. Der Ausgang des Decoders 50 ist außerdem mit einem ersten Eingang 60 einer Auswerteeinheit 5 verbunden. Ein zweiter Eingang 65 der Auswerteeinheit 5 ist über einen Tastschalter 30 mit einem Bezugspotential verbindbar. Ein dritter Eingang 70 der Auswerteeinheit 5 ist mit einem Kartenleser 25 verbunden, der in einem Eingabeschacht 20 des Funkgerätes 95 angeordnet ist. Über einen vierten Eingang 71 der Auswerteeinheit 5 ist der erste Schalter 135 zur Detektion seiner Schalterstellung mit der Auswerteeinheit 5 verbunden. Über einen Akkumulator 55 sind der zweite Schalter 40, der Empfangsverstärker 10, der Demodulator 45 mit dem Mischer 15, der dritte Schalter 165, der Decoder 50, die Auswerteeinheit 5 und der Kartenleser 25 mit Strom versorgbar. Dabei ist die Stromversorgung dem Empfangsverstärker 10 über einen vierten Schalter 150 in einer ersten Schalterstellung 155 zuführbar, wohingegen in einer zweiten Schalterstellung 160 des vierten Schalters 150 der Empfangsverstärker 10 von der Stromversorgung abkoppelbar ist. Auch der vierte Schalter 150 ist vom Akkumulator 55 mit Strom versorgbar. Zur Stromversorgung ist der Akkumulator 55 über einen fünften Schalter 180 in einer ersten Schalterstellung 185 mit den betreffenden Bauteilen verbindbar. Die Stromversorgung kann jedoch auch extern beispielsweise über das Autoradio in einem Kraftfahrzeug oder generell über einen Stromversorgungsadapter 110 im Netzbetrieb erfolgen, wobei die Verbindung zum Netz in Figur 1 durch einen gestrichelten Pfeil an einem Eingang des Stromversorgungsadapters 110 dargestellt ist. Zum Anschluß der externen Stromversorgung wird der Stromversorgungsadapter 110 in einer zweiten Schalterstellung 190 des fünften Schalters 180 mit den zu versorgenden Bauteilen verbunden. An den Akkumulator 55 ist ein Sensor 120 zur Erfassung des Ladungszustandes des Akkumulators 55 angeschlossen, der ebenfalls über den fünften Schalter 180 je nach Schalterstellung vom Akkumulator 55 bzw. dem Stromversorgungsadapter 110 mit Strom versorgt wird. Da der Sensor 120 nur zur Detektion des Ladungszustands des Akkumulators 55 dient, reicht es auch aus, die Stromversorgung des Sensors 120 nur über den Akkumulator 55 zu realisieren. Der fünfte Schalter 180 ist über einen fünften Eingang 72 mit der Auswerteeinheit 5 verbunden und der Sensor 120 ist über einen sechsten Eingang 73 mit der Auswerteeinheit 5 verbunden. An die Auswerteeinheit 5 ist über eine Schnittstelle 125 und einen siebten Eingang 74 eine externe Datenverarbeitungseinheit 130 angeschlossen. Der Akkumulator 55 bzw. der Stromversorgungsadapter 110 übernimmt auch die Stromversorgung von weiteren, in Figur 1 nicht dargestellten Empfangsbausteinen. Die Auswerteeinheit 5 weist einen ersten Ausgang 75 zur Steuerung der Stromversorgung des Mischers 15, einen zweiten Ausgang 80 zur Steuerung der Schalterstellungen des zweiten und des vierten jeweils steuerbaren Schalters 40, 150 und einen dritten Ausgang 81 zur Steuerung der Schalterstellungen des ebenfalls steuerbaren dritten Schalters 165 auf. In einer zweiten Schalterstellung 90 verbindet der zweite Schalter 40 die über den ersten Schalter 135 entsprechend angeschlossene Empfangsantenne 35, 115 direkt mit dem Ausgang des Empfangsverstärkers 10 und damit mit dem Eingang des Demodulators 45, so daß der Empfangsverstärker 10 dadurch überbrückt wird.

Die Funktionsweise der Auswerteeinheit 5 wird in Figur 2 anhand eines Ablaufplanes näher erläutert. Der Ablaufplan wird dabei nach jedem Empfang einer Impulsfolge, die auch als Burst bezeichnet wird, durchlaufen. Dabei wird eine globale Variable eingeführt, die die Anzahl der nacheinander ununterbrochen fehlerfrei empfangenen Bursts enthält. Diese globale Variable wird beim ersten Durchlauf des Ablaufplans gemäß Figur 2 mit Null initialisiert, gleichzeitig befinden sich der zweite Schalter 40 und der vierte Schalter 150 jeweils in ihrer zweiten Schalterstellung 90, 160, die Stromversorgung des Mischers 15 ist auf einen zweiten vorgegebenen Wert verringert und der dritte Schalter 165 befindet sich in seiner zweiten Schalterstellung 175. Weiterhin ist eine Konstante vorgesehen, die angibt, nach wievielen ununterbrochen fehlerfrei nacheinander empfangenen Bursts das Empfangsteil 1 in einem Stromsparmodus betrieben werden kann. Durch diese Konstante ist somit eine Zeit vorgegeben, nach der bei fehlerfreiem Signalempfang die Empfindlichkeit und/oder die Störfestigkeit des Empfangsteils 1 abgesenkt werden kann.

Bei einem Programmpunkt 200 wird von der Auswerteeinheit 5 geprüft, ob der Kartenleser 25 im Eingabeschacht 20 eine Chipkarte detektiert, die einerseits eine Zugangsberechtigung für das Funkgerät realisiert und andererseits die Umschaltung in einen Betriebsmodus zu Testzwecken vorsieht. Weiterhin wird bei diesem Programmpunkt 200 geprüft, ob der zweite Eingang 65 der Auswerteeinheit 5 über den Tastschalter 30 mit dem Bezugspotential verbunden wurde. Außerdem wird die Schalterstellung des ersten Schalters 135 und die Schalterstellung des fünften Schalters 180 geprüft. Dabei wird geprüft, ob die zweite Empfangsantenne 115 an das Funkgerät 95 angeschlossen wurde und ob das Funkgerät 95 über den Stromversorgungsadapter 110 extern mit Strom versorgt wird. weiterhin wird geprüft, ob von der Datenverarbeitungseinheit 130 die Einstellung des Betriebsmodus zu Testzwecken angeordnet wurde. Durch die Auswertung des vom Decoder 50 decodierten Signals wird in der Auswerteeinheit 5 weiterhin geprüft, ob das Funkgerät 95 von einer Basisstation zum Betriebsmodus für Testzwecke aufgefordert wurde, wobei das Funkgerät 95 in einem sogenannten Echobetrieb ein zuvor von der Basisstation an das Funkgerät 95 gesendetes Signal zu Testzwecken wieder an die Basisstation zurücksendet. Außerdem wird mittels des Meßsignals vom Sensor 120 in der Auswerteeinheit 5 geprüft, ob bei eingestellter erster Schalterstellung 185 des fünften Schalters 180 noch genügend Ladung im Akkumulator 55 vorhanden ist, um auf hohen Stromverbrauch zu schalten, ohne daß die Versorgungsspannung unzumutbar stark einbricht. Ist bei genügender Ladung des Akkumulators 55 bzw. angeschlossenem Stromversorgungsadapter 110 zumindest eine der vorgenannten Bedingungen erfüllt, so wird zu Programmpunkt 205 verzweigt, andernfalls wird zu Programmpunkt 220 verzweigt. Bei Programmpunkt 205 werden der zweite Schalter 40 und der vierte Schalter 150 von der Auswerteeinheit 5 auf ihre jeweilige erste Schalterstellung 85, 155 umgeschaltet und dadurch der Empfangsverstärker 10 im Empfangsteil 1 zugeschaltet, falls er nicht bereits zugeschaltet war. Auf diese Weise erhöht die Auswerteeinheit 5 die Empfindlichkeit des Empfangsteils 1 auf einen Maximalwert. Bei Programmpunkt 210 wird die Stromversorgung des Mischers 15 von der Auswerteeinheit 5 auf einen ersten vorgegebenen Wert erhöht, sofern diese Stromversorgung nicht bereits auf diesen Wert gesetzt war. Auf diese Weise wird die Intermodulationsfestigkeit des Empfangsteils 1 auf einen Maximalwert erhöht bzw. Störungen im Nutzkanal minimiert. Bei Programmpunkt 215 wird der dritte Schalter 165 von der Auswerteeinheit 5 auf seine erste Schalterstellung 170 umgeschaltet und dadurch die erste Filterkonfiguration 100 in den Empfangssignalweg geschaltet, falls die erste Filterkonfiguration 100 nicht bereits in den Signalempfangsweg geschaltet war. Auf diese Weise wird die Störfestigkeit des Empfangsteils 1 weiter erhöht, indem Nachbarkanalstörungen und Störungen im Nutzkanal bei der gewählten ersten Filterkonfiguration 100 weitgehend ausgeblendet werden. Je nach Testsituation kann diese Aufgabe auch von der zweiten Filterkonfiguration 105 oder von weiteren in Figur 1 nicht dargestellten und über den dritten Schalter 165 zuschaltbaren Filterkonfigurationen besser realisiert werden. Die Auswerteeinheit 5 muß die am dritten Schalter 165 einzustellende Schalterstellung in Abhängigkeit der vorliegenden Testsituation, die ihr beispielsweise von der Datenverarbeitungseinheit 130 oder der Basisstation mitgeteilt werden kann, veranlassen. Somit kann nach Ausführung des Programmschritts 215 das Funkgerät 95 bei maximaler Leistungsfähigkeit seines Empfangsteils 1 getestet werden. Anschließend wird das Programm verlassen. Bei Programmpunkt 220 wird geprüft, ob der zuletzt empfangene Burst fehlerhaft war. Ist dies der Fall, so wird zu Programmpunkt 225 verzweigt, andernfalls wird zu Programmpunkt 260 verzweigt. Bei Programmpunkt 225 wird die globale Variable auf Null zurückgesetzt. Bei Programmpunkt 230 wird geprüft, ob am zweiten Ausgang 80 der Auswerteeinheit 5 ein Steuersignal anliegt, das den zweiten Schalter 40 und den vierten Schalter 150 in seiner jeweils ersten Schalterstellung 85, 155 hält. Ist dies der Fall, so wird zu Programmpunkt 235 verzweigt, andernfalls wird zu Programmpunkt 255 verzweigt. Bei Programmpunkt 235 wird geprüft, ob die Stromversorgung des Mischers 15 durch die Auswerteeinheit 5 auf den ersten vorgegebenen Wert erhöht ist. Ist dies der Fall, so wird zu Programmpunkt 240 verzweigt, andernfalls wird zu Programmpunkt 250 verzweigt. Bei Programmpunkt 240 wird geprüft, ob am dritten Ausgang 81 der Auswerteeinheit 5 ein Steuersignal anliegt, das den dritten Schalter 165 in seiner ersten Schalterstellung 170 hält. Ist dies der Fall, so wird das Programm verlassen, andernfalls wird zu Programmpunkt 245 verzweigt. Bei Programmpunkt 245 veranlaßt die Auswerteeinheit 5 den dritten Schalter 165 zur Umschaltung in seine erste Schalterstellung 170. Je nach Testsituation kann eine andere als die erste Filterkonfiguration 100 besser für die Erhöhung der Empfangsqualität geeignet sein, so daß auf die entsprechend am besten geeignete Filterkonfiguration wie oben beschrieben umgeschaltet wird. Für das vorliegende Ausführungsbeispiel soll dabei stets angenommen werden, daß dies für die erste Filterkonfiguration 100 der Fall ist. Nach Programmpunkt 245 wird das Programm verlassen. Bei Programmpunkt 250 wird die Stromversorgung des Mischers 15 durch die Auswerteeinheit 5 auf den ersten vorgegebenen Wert erhöht. Anschließend wird das Programm verlassen. Bei Programmpunkt 255 veranlaßt die Auswerteeinheit 5 den zweiten Schalter 40 und den vierten Schalter 150 zur Umschaltung in dessen jeweils erste Schalterstellung 85, 155. Anschließend wird das Programm verlassen.

Bei Programmpunkt 260 wird die globale Variable inkrementiert. Bei Programmpunkt 265 wird geprüft, ob der Wert der globalen variablen dem Wert der Konstanten entspricht. Ist dies der Fall, so wird zu Programmpunkt 270 verzweigt, andernfalls wird das Programm verlassen. Bei Programmpunkt 270 veranlaßt die Auswerteeinheit 5 den zweiten Schalter 40 und den Schalter 150 dazu, auf dessen jeweils zweite Schalterstellung 90, 160 umzuschalten, falls diese zweite Schalterstellung 90 nicht bereits eingestellt war. Bei Programmpunkt 275 wird die Stromversorgung des Mischers 15 durch die Auswerteeinheit 5 auf den zweiten vorgegebenen Wert verringert, falls die Stromversorgung des Mischers 15 nicht bereits auf diesen Wert gesetzt war. Bei Programmpunkt 280 wird die zweite Filterkonfiguration 105 mittels der zweiten Schalterstellung 175 des dritten Schalters 165 in den Übertragungsweg geschaltet, bzw. bei Verwendung von aktiven Filtern diejenige Filterkonfiguration 100, 105, die weniger Strom verbraucht. Anschließend wird das Programm verlassen.

Der erste Schalter 135 und der fünfte Schalter 180 sind nicht steuerbar ausgeführt im Gegensatz zum zweiten Schalter 40, zum dritten Schalter 165 und zum vierten Schalter 150. Das Umschalten des ersten Schalters 135 und des fünften Schalters 180 wird auch nicht durch die Auswerteeinheit 5 bewirkt, sondern erfolgt beim Anschluß des Funkgerätes 95 an die zweite Empfangsantenne 115 bzw. an die externe Stromversorgung bzw. den Stromversorgungsadapter 110 beispielsweise des Autoradios, wozu die beiden Schalter 135, 180 in vorteilhafter Weise als Druckkontakt ausgebildet sind. Beim Entfernen des Funkgerätes 95 vom Autoradio federn die beiden Schalter 135, 180 dann jeweils wieder in ihre erste Schalterstellung 140, 185 zum Anschluß der ersten Empfangsantenne 35 bzw. des Akkumulators 55 zurück. Die Einstellung des Betriebsmodus zu Testzwecken, die zu optimierten Empfangsbedingungen führt und beispielsweise durch Betätigen des Tastschalters 30 eingestellt wird, kann auch für den Normalbetrieb verwendet werden, um generell schlechte Verständlichkeit aufgrund fehlerhafter Bursts zu verhindern.

Weiterhin kann am Funkgerät 95 ein Bedien-Menü vorgesehen sein, mittels dem der Benutzer wählen kann, ob er auf gute Empfangsqualität oder auf lange Lebensdauer des Akkumulators 55 mehr Wert legt. Diese Wahl kann in einem in Figur 1 nicht dargestellten und mit der Auswerteeinheit 5 verbundenen Speicher des Funkgerätes 95 abgespeichert werden und ebenfalls als Bedingung zur Einstellung des Betriebsmodus zu Testzwecken geprüft werden.

Weiterhin kann eine in den Eingabeschacht 20 einzugebende Chipkarte auch so programmiert werden, daß die Auswerteeinheit 5 veranlaßt wird, das Funkgerät 95 immer mit möglichst wenig Strom zu betreiben, auch auf Kosten der Empfangsqualität. Schließlich ist auch denkbar, daß jeder Benutzer seinen Wünschen bezüglich der Empfangsqualität des Empfangsteils 1 und der Versorgungsdauer einer Akkumulatorladung gemäß eine entsprechend programmierte Chipkarte zur Einführung in den Eingabeschacht 20 erhält, so daß die Empfangsqualität des Empfangsteils 1 des Funkgerätes 95 benutzerindividuell eingestellt werden kann. Durch die entsprechende Programmierung der Chipkarten kann ein Diensteanbieter für unterschiedliche Empfangsqualitäten auch unterschiedlich hohe Gebühren erheben.

Wird die Stromversorgung des Mischers 15, d. h. dessen Arbeitspunkt erhöht, so ergibt sich eine Mischerkennlinie, bei der Intermodulationsprodukte im Nutzfrequenzbereich reduziert und dadurch eine entsprechende Störbeeinflussung der empfangenen Nutzsignale verringert wird.

In dem beschriebenen Ausführungsbeispiel hat die Auswerteeinheit 5 mehrere Eingriffsmöglichkeiten, um die Empfindlichkeit und/oder die Störfestigkeit des Empfangsteils 1 an die Empfangs- bzw. Testbedingungen anzupassen. Dabei ist die Stromaufnahme nicht relevant, wenn eine Chipkarte beispielsweise zu Testzwecken in den Eingabeschacht 20 eingeführt wurde. In diesem Fall handelt es sich nicht um normalen Telefonbetrieb, sondern um den Test-Betriebsmodus. Daher wird die Empfindlichkeit und/oder Störfestigkeit des Empfangsteils 1 auf den Maximalwert erhöht.

Im Normalbetrieb wird ein differenzierteres Vorgehen realisiert. Bei einem zuvor schlecht empfangenen Burst wird zunächst die Empfindlichkeit des Empfangsteils 1 heraufgesetzt, indem der stromkonsumierende Empfangsverstärker 10 zugeschaltet wird. Zeigt diese Maßnahme keinen Erfolg, da sich innerhalb der vorgegebenen Zeit wiederum ein fehlerhafter Empfang eines Bursts ergibt, so wird die Intermodulationsfestigkeit durch Erhöhung des Arbeitspunktes bzw. der Stromversorgung des Mischers 15 verbessert. Wenn auch diese Maßnahme nicht zum gewünschten Erfolg führt, kann der Fachmann weitere ihm bekannte Maßnahmen zur Erhöhung der Empfindlichkeit und/oder Störfestigkeit des Empfangsteils 1 treffen, beispielsweise die Zuschaltung der für die jeweilige Empfangssituation besser geeigneten Filterkonfiguration 100, 105 oder weitere in diesem Ausführungsbeispiel jedoch nicht beschriebene Maßnahmen. Erst nach Ablauf der durch die Konstante vorgegebenen Zeit mit fehlerfreiem Empfang werden die genannten stromkonsumierenden Maßnahmen rückgängig gemacht, um Strom zu sparen. Sollten sich die Empfangsbedingungen bis dahin nicht gebessert haben, gehen wieder maximal drei Bursts durch fehlerhaften Empfang verloren, bis wieder auf maximale Empfindlichkeit und/oder Störfestigkeit des Empfangsteils 1 umgeschaltet wird.

Die Erfindung ist dabei nicht auf Funkgeräte für Mobilfunk beschränkt, sondern auf alle Funkverkehrsanwendungen, also beispielsweise auch für Schnurlostelefonie anwendbar.

## Patentansprüche

1. Funkgerät (95), insbesondere für Mobilfunk, mit einem Empfangsteil (1), wobei eine Auswerteeinheit (5) vorgesehen ist, die das Empfangsteil (1) in Abhängigkeit von einer vorgebbaren Signalempfangsqualität und dem tatsächlichen Signalempfang steuert, wobei die Auswerteeinheit (5) bei fehlerhaftem Signalempfang die Empfindlichkeit und/oder die Störfestigkeit, insbesondere bei Nachbarkanalstörungen oder Intermodulation, des Empfangsteils (1) erhöht, **dadurch gekennzeichnet, daß** die Auswerteeinheit (5) bei für eine vorgegebene Zeit fehlerfreiem Signalempfang die Empfindlichkeit und/oder die Störfestigkeit des Empfangsteils (1) absenkt, derart, dass Energie eingespart wird.

2. Funkgerät (95) nach Anspruch 1, **dadurch gekennzeichnet, daß** ein Betriebsmodus vorgesehen ist, bei dem die Auswerteeinheit (5) die Empfindlichkeit und/oder die Störfestigkeit des Empfangsteils (1) auf einen Maximalwert erhöht.

3. Funkgerät (95) nach Anspruch 1 oder 2, **dadurch gekennzeichnet, daß** das Empfangsteil (1) mindestens einen zuschaltbaren Empfangsverstärker (10) umfaßt und daß die Auswerteeinheit (5) den mindestens einen Empfangsverstärker (10) bei fehlerhaftem Signalempfang zuschaltet und bei fehlerfreiem Signalempfang überbrückt.

4. Funkgerät (95) nach Anspruch 1, 2 oder 3, **dadurch gekennzeichnet, daß** das Empfangsteil (1) mindestens einen Mischer (15) aufweist und daß die Auswerteeinheit (5) die Stromversorgung des mindestens einen Mischers (15) bei fehlerhaftem Signalempfang auf einen ersten vorgegebenen Wert erhöht und bei fehlerfreiem Signalempfang auf einen zweiten vorgegebenen Wert verringert.

5. Funkgerät (95) nach einem der vorherigen Ansprüche, **dadurch gekennzeichnet, daß** das Empfangsteil (1) mindestens eine erste Filterkonfiguration (100) und eine zweite Filterkonfiguration (105) umfaßt und daß die Auswerteeinheit (5) die Filterkonfiguration (100, 105) zuschaltet, bei der eine höhere Störfestigkeit des Empfangsteils (1) gewährleistet ist.

6. Funkgerät (95) nach einem der Ansprüche 2 bis 5, **dadurch gekennzeichnet, daß** in dem Betriebsmodus die Auswerteeinheit (5) den mindestens einen Empfangsverstärker (10) im Empfangsteil (1) zuschaltet und/oder die Stromversorgung des Mischers (15) auf den ersten vorgegebenen Wert erhöht und/oder auf die Filterkonfiguration (100) umschaltet, bei der eine höhere Störfestigkeit des Empfangsteils (1) gewährleistet ist.

7. Funkgerät (95) nach einem der Ansprüche 2 bis 6, **dadurch gekennzeichnet, daß** ein Eingabeschacht (20) für eine Chipkarte und ein Kartenleser (25) vorgesehen sind und daß der Betriebsmodus in Abhängigkeit einer vom Kartenleser (25) im Eingabeschacht (20) detektierten Chipkarte einstellbar ist.

8. Funkgerät (95) nach einem der Ansprüche 2 bis 7, **dadurch gekennzeichnet, daß** der Betriebsmodus vorzugsweise durch einen Tastschalter (30) am Funkgerät einstellbar ist.

9. Funkgerät (95) nach einem der Ansprüche 2 bis 8, **dadurch gekennzeichnet, daß** der Betriebsmodus in Abhängigkeit einer Aufforderung einer Basisstation, vorzugsweise zur Rücksendung eines zuvor an das Funkgerät (95) gesendeten Signals, am Funkgerät (95) einstellbar ist.

10. Funkgerät (95) nach einem der Ansprüche 2 bis 9, **dadurch gekennzeichnet, daß** der Betriebsmodus bei Detektion einer externen Stromversorgung (110), insbesondere über einen Stromversorgungsadapter, und/oder einer angeschlossenen externen Antenne (115) einstellbar ist.

11. Funkgerät (95) nach einem der Ansprüche 2 bis 10, dadurch **dadurch gekennzeichnet, daß** ein Sensor (120) vorgesehen ist und daß der Betriebsmodus in Abhängigkeit eines vom Sensor (120) ermittelten Meßwertes einstellbar ist.

12. Funkgerät (95) nach Anspruch 11, **dadurch gekennzeichnet, daß** der Sensor (120) die Ladung eines an das Funkgerät (95) angeschlossenen Akkumulators (55) detektiert und daß der Betriebsmodus in Abhängigkeit der durch den Sensor (120) detektierten Ladung des Akkumulators (55) einstellbar ist.

13. Funkgerät (95) nach einem der Ansprüche 2 bis 12, **dadurch gekennzeichnet, daß** eine Schnittstelle (125) für den Anschluß einer Datenverarbeitungseinheit (130) vorgesehen ist und daß der Betriebsmodus in Abhängigkeit von über die Schnittstelle (125) an das Funkgerät (95) übertragenen Daten einstellbar ist.

## Claims

1. Radio (95), in particular for mobile radio, having a receiving section (1), with an evaluation unit (5) being provided which controls the receiving section (1) as a function of a signal reception quality, which can be predetermined, and of the actual signal reception, with the evaluation unit (5) increasing the sensitivity and/or the interference immunity, particularly in the case of adjacent channel interference or intermodulation, of the receiving section (1) if the signal reception is faulty, **characterized in that** the evaluation unit (5) reduces the sensitivity and/or the interference immunity of the receiving section (1) if the signal reception has been fault-free for a predetermined time, such that energy is saved.

2. Radio (95) according to Claim 1, **characterized in that** an operating mode is provided in which the evaluation unit (5) increases the sensitivity and/or the interference immunity of the reception section (1) to a maximum value.

3. Radio (95) according to Claim 1 or 2, **characterized in that** the receiving section (1) has at least one receiving amplifier (10) which can be connected, and **in that** the evaluation unit (5) connects the at least one receiving amplifier (10) if the signal reception is faulty, and bridges it if the signal reception is fault-free.

4. Radio (95) according to Claim 1, 2 or 3, **characterized in that** the receiving section (1) has at least one mixer (15), and **in that** the evaluation unit (5) can increase the power supply for the at least one mixer (15) to a first predetermined value if the signal reception is faulty, and can reduce it to a second predetermined value if the signal reception is fault-free.

5. Radio (95) according to one of the preceding claims, **characterized in that** the receiving section (1) has at least one first' filter configuration (100) and one second filter configuration (105), and **in that** the evaluation unit (5) connects the filter configuration (100, 105) which ensures better interference immunity for the receiving section (1).

6. Radio (95) according to one of Claims 2 to 5, **characterized in that**, in the operating mode, the evaluation unit (5) connects the at least one receiving amplifier (10) in the receiving section (1) and/or increases the power supply for the mixer (15) to the first predetermined value and/or switches to the filter configuration (100) which ensures better interference immunity for the receiving section (1).

7. Radio (95) according to one of Claims 2 to 6, **characterized in that** an input slot (20) for a smart card and a card reader (25) are provided, and **in that** the operating mode can be selected as a function of a smart card which is detected by the card reader (25) in the input slot (20).

8. Radio (95) according to one of Claims 2 to 7, **characterized in that** the operating mode can preferably be selected by a push-button switch (30) on the radio.

9. Radio (95) according to one of Claims 2 to 8, **characterized in that** the operating mode can be selected as a function of a request from a base station, preferably to return a signal which was previously sent to the radio (95).

10. Radio (95) according to one of Claims 2 to 9, **characterized in that** the operating mode can be selected on detection of an external power supply (110), in particular via a power supply adapter, and/or on detection that an external antenna (115) is connected.

11. Radio (95) according to one of Claims 2 to 10, **characterized in that** a sensor (120) is provided, and **in that** the operating mode can be selected as a function of a measurement value which is determined by the sensor (120).

12. Radio (95) according to Claim 11, **characterized in that** the sensor (120) detects the charge in a rechargeable battery (55) which is connected to the radio (95), and **in that** the operating mode can be selected as a function of the charge in the rechargeable battery (55) as detected by the sensor (120).

13. Radio (95) according to one of Claims 2 to 12, **characterized in that** an interface (125) is provided for the connection of a data processing unit (130), and **in that** the operating mode can be selected as a function of data which is transmitted via the interface (125) to the radio (95).

## Revendications

1. Appareil radio (95) notamment radio mobile comportant une partie récepteur (1) avec une unité d'exploitation (5) qui commande la partie récepteur (1) en fonction d'une qualité de réception de signal prédéterminé et de la réception effective du signal,
l'unité d'exploitation (5) en cas de réception défectueuse du signal augmentant la sensibilité et/ou la résistance aux perturbations notamment vis à vis des perturbations de canaux voisins ou d'intermodulations de la partie récepteur (1),
**caractérisé en ce que**
l'unité d'exploitation (5) diminue la sensibilité pour une réception de signal sans défaut pendant une durée prédéterminée et/ou diminue la résistance aux perturbations de la partie récepteur (1) pour économiser de l'énergie.

2. Appareil radio (95) selon la revendication 1,
**caractérisé par**
un mode de fonctionnement pour lequel l'unité d'exploitation (5) augmente la sensibilité de réception et/ou la résistance aux perturbations de la partie récepteur (1) jusqu'à une valeur maximale.

3. Appareil radio (95) selon la revendication 1 ou 2,
**caractérisé en ce que**
la partie récepteur (1) comprend au moins un amplificateur de réception (10) qui peut être branché et l'unité d'exploitation (5) branche l'amplificateur de réception (10) en cas de réception défectueuse de signal et court-circuite cet amplificateur si la réception du signal est sans défaut.

4. Appareil radio (95) selon les revendications 1 à 3,
**caractérisé en ce que**
la partie réception (1) comprend au moins un mélangeur (15) et l'unité d'exploitation (5) augmente l'alimentation électrique du mélangeur (15) en cas de réception de signal avec défaut jusqu'à une première valeur prédéterminée et en cas de réception de signal sans défaut, elle diminue jusqu'à une seconde valeur prédéterminée.

5. Appareil radio (95) selon l'une des revendications précédentes,
**caractérisé en ce que**
la partie récepteur (1) comprend au moins une première configuration de filtre (100) et une seconde configuration de filtre (105) et l'unité d'exploitation (5) branche la configuration de filtre (100, 105) qui assure la résistance la plus élevée aux perturbations pour la partie récepteur (1).

6. Appareil radio (95) selon l'une des revendications 2 à 5,
**caractérisé en ce que**
dans le mode de fonctionnement l'unité d'exploitation (5) branche au moins un amplificateur de réception (10) dans la partie récepteur et/ou augmente l'alimentation électrique du mélangeur (15) à une première valeur prédéterminée et/ou commute la configuration de filtre (100) qui assure une plus grande résistance aux perturbations pour la partie récepteur (1).

7. Appareil radio (95) selon l'une des revendications 2 à 6,
**caractérisé par**
un logement (20) pour recevoir une carte à puce et un lecteur de carte (25), et
le mode de fonctionnement est réglable suivant la carte à puce détectée par le lecteur de carte (25) dans le logement (20).

8. Appareil radio (95) selon l'une des revendications 2 à 7,
**caractérisé en ce que**
le mode de fonctionnement est réglable de préférence par un commutateur à touche (30) de l'appareil radio.

9. Appareil radio (95) selon l'une des revendications 2 à 8,
**caractérisé en ce que**
le mode de fonctionnement est réglé suivant une demande d'une station de base de préférence pour l'émission en retour d'un signal envoyé précédemment à l'appareil radio (95).

10. Appareil radio (95) selon l'une des revendications 2 à 9,
**caractérisé en ce que**
le mode de fonctionnement est réglable à la détection d'une alimentation externe (110) notamment d'un adaptateur d'alimentation et/ou du branchement d'une antenne externe (115).

11. Appareil radio (95) selon l'une des revendications 2 à 10,
**caractérisé par**
un capteur (120) et le mode de fonctionnement est réglé suivant une valeur de mesure fournie par un capteur (120).

12. Appareil radio (95) selon la revendication 11,
**caractérisé en ce que**
le capteur (120) détecte la charge d'un accumulateur (55) relié à l'appareil radio (95) et règle le mode de fonctionnement suivant la charge de l'accumulateur (55) détecté par le capteur (120).

13. Appareil radio (95) selon l'une des revendications 2 à 12,
**caractérisé par**
une interface (125) pour brancher une unité de traitement de données (130), et
le mode de fonctionnement se règle suivant les données transmises à l'appareil radio (95) à travers l'interface (125).
